(19) Europäisches Patentamt
European Patent Office
Office européen des brevets

(11) **EP 4 101 116 B1**

(12) **FASCICULE DE BREVET EUROPEEN**

(45) Date de publication et mention de la délivrance du brevet:
**27.11.2024 Bulletin 2024/48**

(21) Numéro de dépôt: **21702506.3**

(22) Date de dépôt: **04.02.2021**

(51) Classification Internationale des Brevets (IPC):
**H04L 7/033** (2006.01)    **H04L 7/04** (2006.01)

(52) Classification Coopérative des Brevets (CPC):
**H04L 7/033; H04L 7/0083;** H04L 7/046

(86) Numéro de dépôt international:
**PCT/EP2021/052660**

(87) Numéro de publication internationale:
**WO 2021/156364 (12.08.2021 Gazette 2021/32)**

(54) **PROCÉDÉ DE RÉCUPÉRATION DU TEMPS SYMBOLE PAR UN DISPOSITIF RÉCEPTEUR**

VERFAHREN ZUR RÜCKGEWINNUNG DES SYMBOLTAKTES DURCH EINE EMPFANGSVORRICHTUNG

METHOD OF RECUPERATION OF THE SYMBOL TIME BY A RECEIVING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2020 FR 2001190**

(43) Date de publication de la demande:
**14.12.2022 Bulletin 2022/50**

(73) Titulaire: **UNABIZ**
**31670 Labège (FR)**

(72) Inventeurs:
• **BAILLS, Stéphane**
**31400 Toulouse (FR)**
• **BESSET, Maxime**
**31400 Toulouse (FR)**
• **LIONEL, Zirphile**
**31520 Ramonville Saint Agne (FR)**

(74) Mandataire: **Ipside**
**6, Impasse Michel Labrousse**
**31100 Toulouse (FR)**

(56) Documents cités:
EP-A1- 0 573 841        EP-A2- 1 467 507
EP-A2- 1 838 013        US-A- 4 918 406
US-A- 5 506 577         US-A- 5 652 541
US-A- 5 671 257         US-A- 5 883 533
US-A- 5 943 378         US-A- 6 064 707
US-A1- 2003 212 930     US-A1- 2005 063 494

US-A1- 2007 009 074     US-A1- 2007 104 292
US-A1- 2009 147 901     US-A1- 2011 249 781
US-A1- 2011 311 010     US-A1- 2014 064 744
US-A1- 2014 126 656     US-A1- 2015 043 698
US-A1- 2015 280 956     US-A1- 2017 214 516
US-A1- 2018 191 540     US-A1- 2020 177 362
US-B1- 6 369 659        US-B1- 6 731 697
US-B1- 7 158 601        US-B1- 8 855 179
US-B2- 7 049 869        US-B2- 9 898 561

• LIU XUAN ET AL: "An improved adaptive interpolation clock recovery loop based on phase splitting algorithm for coherent optical communication system", PROCEEDINGS OF SPIE; [PROCEEDINGS OF SPIE ISSN 0277-786X VOLUME 10524], SPIE, US, vol. 10617, 10 January 2018 (2018-01-10), pages 106170S - 106170S, XP060098429, ISBN: 978-1-5106-1533-5, DOI: 10.1117/12.2295352
• ZDENEK KOLKA ET AL: "Non-stationary statistical simulation of blind-oversampling CDR circuits", CIRCUITS AND SYSTEMS (LASCAS), 2013 IEEE FOURTH LATIN AMERICAN SYMPOSIUM ON, IEEE, 27 February 2013 (2013-02-27), pages 1 - 4, XP032409905, ISBN: 978-1-4673-4897-3, DOI: 10.1109/LASCAS.2013.6519045

- SHUANG LIAO ET AL: "Research and implementation of clock recovery method based on software PLL", 2017 13TH IEEE INTERNATIONAL CONFERENCE ON ELECTRONIC MEASUREMENT & INSTRUMENTS (ICEMI), IEEE, 20 October 2017 (2017-10-20), pages 366 - 370, XP033305357, [retrieved on 20180119], DOI: 10.1109/ICEMI.2017.8265819
- JINGFENG LIU ET AL: "Symbol timing recovery for low-SNR partial response recording channels", GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002; [IEEE GLOBAL TELECOMMUNICATIONS CONFERENCE], NEW YORK, NY : IEEE, US, vol. 2, 17 November 2002 (2002-11-17), pages 1129 - 1136, XP010636322, ISBN: 978-0-7803-7632-8, DOI: 10.1109/GLOCOM.2002.1188372

**Description**

**Domaine de l'invention**

La présente invention appartient au domaine des communications numériques. Plus particulièrement, l'invention concerne un procédé de récupération du temps symbole par un dispositif récepteur pour décoder une séquence de symboles émise par un dispositif émetteur dans un cas où le temps symbole du dispositif émetteur peut être modélisé par un processus stationnaire présentant un biais non négligeable par rapport au temps symbole du dispositif récepteur.

**Etat de la technique**

Dans les systèmes de communications numériques, lorsqu'un émetteur transmet un message sous la forme d'une séquence de symboles, un récepteur cohérent doit connaître la synchronisation des symboles transmis par l'émetteur pour pouvoir décoder le message.

Le temps symbole au niveau du dispositif émetteur est déterminé à partir d'une horloge appartenant au dispositif émetteur. Le temps symbole au niveau du dispositif récepteur est déterminé à partir d'une horloge appartenant au dispositif récepteur. Un biais peut cependant exister entre l'horloge du dispositif émetteur et l'horloge du dispositif récepteur si les deux horloges présentent une différence de fréquence non négligeable l'une par rapport à l'autre. Une telle situation conduit à une dérive du temps symbole du dispositif récepteur par rapport au temps symbole du dispositif émetteur, ce qui entraîne une erreur croissante dans la détermination des instants des symboles lors de l'échantillonnage par le dispositif récepteur. Cela peut conduire à des erreurs dans le décodage des symboles et potentiellement à une impossibilité de décoder le message reçu.

Il existe différentes méthodes de récupération du temps symbole permettant d'estimer le point d'échantillonnage idéal d'un symbole. Les méthodes pour suivre la synchronisation des signaux numériques sont généralement basées sur des étapes de mesure et de correction continues. Chaque méthode comporte des contraintes spécifiques sur le codage de canal, la mise en forme des impulsions de modulation, la génération des symboles, l'échantillonnage du signal, etc. Par exemple, une méthode basée sur l'algorithme de Gardner permet de mesurer et de corriger une erreur sur le temps symbole à chaque transition entre deux symboles successifs.

Les méthodes existantes ne sont cependant pas toujours suffisamment efficaces lorsque le biais entre le temps symbole du dispositif émetteur et le temps symbole du dispositif récepteur est important, notamment dans le cas où la modulation utilisée ne provoque pas nécessairement une transition d'état entre deux symboles successifs. Il est certes envisageable d'utiliser des impulsions de modulation dont la forme contient une transition d'état à chaque symbole, comme par exemple le codage retour-à-zéro (RZ pour « Return to Zero » en anglais). Avec un tel codage, le signal présente une transition d'état à chaque symbole, même s'il y a une succession de deux symboles identiques. Cependant, le codage retour-à-zéro consomme le double de la bande passante pour atteindre le même débit comparé au format non-retour-à-zéro (NRZ pour « Non Return to Zero » dans la littérature anglo-saxonne).

Dans les systèmes de communication sans fil de type Internet des Objets (IoT, pour « Internet of Things » en anglais), les dispositifs émetteurs sont généralement des dispositifs à bas coût pour lesquels les spécifications techniques sur la fréquence de transmission des symboles (« baud rate » dans la littérature anglo-saxonne) ne doivent pas être trop contraignantes. Il convient de trouver pour un tel système une solution permettant de synchroniser de manière efficace le temps symbole au niveau d'un dispositif récepteur, notamment lorsque la modulation utilisée ne favorise pas les transitions entre symboles.

Les demandes de brevet US 6 064 707 A et US 2014/126656 A1 décrivent différentes méthodes de récupération de temps symbole. Ces méthodes sont basées sur des solutions purement matérielles (méthodes « hardware »). La demande de brevet US 5 506 577 A décrit une méthode de récupération de temps symbole basé sur une estimation de la fréquence des symboles transmis par un dispositif émetteur.

**Exposé de l'invention**

La présente invention a pour objectif de remédier à tout ou partie des inconvénients de l'art antérieur, notamment ceux exposés ci-avant.

A cet effet, et selon un premier aspect, il est proposé par la présente invention un procédé de récupération du temps symbole par un dispositif récepteur pour décoder une séquence de symboles émise par un dispositif émetteur dans un cas où le temps symbole du dispositif émetteur présente un biais par rapport au temps symbole du dispositif récepteur. Le procédé comprend les étapes suivantes :

- un échantillonnage d'un signal en bande de base représentatif de la séquence de symboles, chaque symbole étant associé à un « instant symbole » d'échantillonnage,

- pour un symbole, dit « symbole courant », une détection d'une transition entre le symbole courant et le symbole précédent le symbole courant, ladite transition étant détectée si le symbole courant et le symbole précédent présentent des états différents,
- en présence d'une transition :

  ◦ une mesure d'une erreur absolue sur l'instant symbole du symbole courant,
  ◦ une mise à jour, en fonction de l'erreur absolue mesurée, d'un modèle statistique du biais entre le temps symbole du dispositif émetteur et le temps symbole du dispositif récepteur,
  ◦ une correction de l'instant symbole du symbole suivant en fonction de l'erreur absolue mesurée et/ou en fonction d'un biais estimé à partir du modèle statistique,

- en l'absence d'une transition :

  ◦ une extrapolation d'une erreur relative sur l'instant symbole du symbole courant à partir du modèle statistique,
  ◦ une correction de l'instant symbole du symbole suivant en fonction de l'erreur relative extrapolée.

L'erreur absolue mesurée ou l'erreur relative extrapolée sur l'instant symbole du symbole courant est représentative d'un retard ou d'une avance de l'instant symbole estimé par rapport à l'instant symbole exact du symbole courant.

Le biais estimé à partir du modèle statistique est représentatif d'une dérive du temps symbole du dispositif émetteur par rapport au temps symbole du dispositif récepteur. Cette dérive entraîne un retard ou une avance supplémentaire à chaque nouveau symbole. Le biais estimé est donc représentatif d'une erreur temporelle par symbole.

Avec de telles dispositions, pendant les périodes où il n'y a pas de transitions entre symboles, même si une erreur absolue ne peut pas être mesurée, il reste possible d'appliquer une correction sur les instants des symboles suivants en fonction du biais estimé à l'aide du modèle statistique.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, une correction de l'instant symbole du symbole suivant n'est effectuée que si un critère prédéterminé est vérifié au cours d'une étape de vérification.

Dans des modes particuliers de mise en oeuvre, la vérification du critère prédéterminé comporte une comparaison de la valeur de la correction à effectuer avec un seuil prédéterminé.

De telles dispositions permettent d'éviter des corrections intempestives dues par exemples à des fluctuations temporelles du temps symbole qui n'impactent que certains symboles localement. Cela peut notamment permettre d'éviter que l'erreur après correction soit pire qu'avant la correction.

Dans des modes particuliers de mise en oeuvre, la vérification du critère prédéterminé comporte une comparaison d'un nombre d'éléments contenus dans le modèle statistique avec un seuil prédéterminé.

Dans des modes particuliers de mise en oeuvre, la vérification du critère prédéterminé comporte une vérification que la valeur de la correction à effectuer s'inscrit dans un intervalle de confiance assujetti à une puissance statistique donnée.

En effet, plus le nombre d'éléments contenus dans le modèle statistique est grand, et plus la précision de l'estimation du biais sera bonne. De telles dispositions permettent donc d'éviter d'appliquer une correction si la confiance que l'on accorde à cette correction n'est pas suffisante (ou autrement dit si la probabilité que la correction soit effectivement pertinente n'est pas assez forte).

Dans des modes particuliers de mise en oeuvre, le signal en bande de base est obtenu à partir d'un signal modulé en phase ou en fréquence par la séquence de symboles par le dispositif émetteur.

Dans des modes particuliers de mise en oeuvre, le signal est modulé par le dispositif émetteur par une modulation BPSK, DBPSK, GFSK ou DGFSK.

Dans des modes particuliers de mise en oeuvre, le procédé comporte une étape préalable, par le dispositif émetteur, avant l'émission de la séquence de symboles, d'insertion d'un motif de synchronisation au début de la séquence de symboles, ledit motif de synchronisation comportant une séquence de symboles connue à la fois par le dispositif émetteur et par le dispositif récepteur.

Dans des modes particuliers de mise en oeuvre, la séquence de symboles du motif de synchronisation présente un rapport entre un nombre de transitions entre symboles et le nombre de symboles qui composent le motif de synchronisation au moins égal à un seuil prédéterminé. Par exemple, le nombre de transitions entre symboles est au moins égal à la moitié du nombre de symboles qui composent le motif de synchronisation.

Selon un deuxième aspect, la présente invention concerne un produit programme d'ordinateur comportant un ensemble d'instructions de code de programme qui, lorsqu'elles sont exécutées par un processeur, configurent ledit processeur pour mettre en oeuvre un procédé de récupération du temps symbole selon l'un quelconque des modes de mise en oeuvre précédents.

Selon un troisième aspect, la présente invention concerne un dispositif récepteur d'un système de communication comportant des moyens configurés pour mettre en oeuvre un procédé de récupération du temps symbole selon l'un quelconque des modes de mise en oeuvre précédents.

Selon un quatrième aspect, la présente invention concerne un système de communication comportant un tel dispositif récepteur.

**Présentation des figures**

L'invention sera mieux comprise à la lecture de la description suivante, donnée à titre d'exemple nullement limitatif, et faite en se référant aux figures 1 à 6 qui représentent :

[Fig. 1] une représentation schématique d'un système de communication sans fil,
[Fig. 2] une représentation schématique d'un signal représentant une séquence de symboles binaires à émettre par un dispositif émetteur,
[Fig. 3] une représentation schématique d'un signal en bande de base représentatif d'une séquence de symboles binaires établi par un dispositif récepteur,
[Fig. 4] une représentation schématique des principales étapes d'un procédé de récupération du temps symbole selon l'invention,
[Fig. 5] une représentation schématique d'un exemple de mise en oeuvre d'une mesure d'une erreur absolue sur l'instant d'un symbole courant,
[Fig. 6] une représentation schématique des principales étapes d'un mode particulier de mise en oeuvre d'un procédé de récupération du temps symbole selon l'invention.

Dans ces figures, des références identiques d'une figure à une autre désignent des éléments identiques ou analogues. Pour des raisons de clarté, les éléments représentés ne sont pas nécessairement à une même échelle, sauf mention contraire.

**Description détaillée d'un mode de réalisation de l'invention**

Comme indiqué précédemment, la présente invention trouve une application particulièrement avantageuse, bien que nullement limitative, dans les systèmes de communication sans fil de type IoT. Dans la suite de la description, on se place à titre d'exemple nullement limitatif dans le cas d'un tel système.

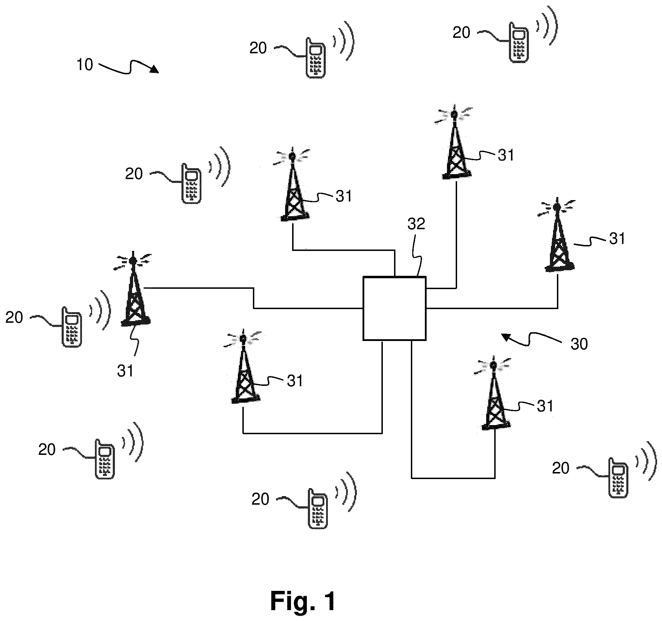

La figure 1 représente schématiquement un système 10 de communication sans fil de type IoT, comportant un ou plusieurs terminaux 20 et un réseau d'accès 30. Le réseau d'accès 30 comporte plusieurs stations de base 31 et un serveur 32 reliées auxdites stations de base 31.

Dans un tel système 10 de communication sans fil, les échanges de données sont essentiellement monodirectionnels, en l'occurrence sur un lien montant des terminaux 20 vers le réseau d'accès 30 du système 10 de communication sans fil. Dans la suite de la description, à titre d'exemple nullement limitatif, on considère que les terminaux 20 sont des dispositifs émetteurs 20. Rien n'empêche cependant que les terminaux puissent également jouer le rôle d'un dispositif récepteur pour recevoir des messages en provenance du réseau d'accès 30. Lorsqu'un terminal joue le rôle de dispositif récepteur, il peut également mettre en oeuvre le procédé de récupération du temps symbole selon l'invention.

Afin de minimiser les risques de perdre un message émis par un dispositif émetteur 20, la planification du réseau d'accès est souvent réalisée de telle sorte qu'une zone géographique donnée est couverte simultanément par plusieurs stations de base 31, de telle manière qu'un message émis par un dispositif émetteur 20 peut être reçu par plusieurs stations de base 31.

Chaque station de base 31 est adaptée à recevoir des messages des dispositifs émetteurs 20 qui se trouvent à sa portée. Chaque message ainsi reçu est par exemple transmis au serveur 32 du réseau d'accès 10, éventuellement accompagné d'autres informations comme un identifiant de la station de base 31 qui l'a reçu, une valeur représentative de la qualité du signal radio transportant le message, la fréquence centrale sur laquelle le message a été reçu, une date à laquelle le message a été reçu, etc. Le serveur 32 traite par exemple l'ensemble des messages reçus des différentes stations de base 31. Le lien de communication entre une station de base 31 et le serveur 32 peut être supporté par une fibre optique ou un câble électrique, mais il peut aussi s'agir d'un lien de communication radio.

Dans la suite de la description, on considère à titre d'exemple nullement limitatif que les stations de base 31 sont des dispositifs récepteurs 31 mettant en oeuvre un procédé de récupération du temps symbole selon l'invention. Rien n'empêche cependant que les stations de base puissent également jouer le rôle d'un dispositif émetteur pour envoyer des messages à destination d'un terminal 20. Dans une variante, le décodage d'un message peut être réalisé au niveau du serveur 32 (et non pas au niveau de la station de base 31). Dans un tel cas, c'est le serveur 32 qui joue le rôle du dispositif récepteur mettant en oeuvre le procédé de récupération du temps symbole selon l'invention.

Le système 10 de communication est par exemple un réseau étendu sans fil à basse consommation électrique connu sous le terme LPWAN (acronyme anglais de « Low Power Wide Area Network »). Un tel système de communication sans fil est un réseau d'accès à longue portée (supérieure à un kilomètre, voire même supérieure à quelques dizaines de kilomètres), à faible consommation énergétique (par exemple une consommation énergétique lors de la transmission ou de la réception d'un message inférieure à 100 mW, voire inférieure à 50 mW, voire même inférieure à 25 mW), et dont les débits sont généralement inférieurs à 1 Mbits/s. De tels systèmes de communication sans fil sont particulièrement adaptés pour des applications impliquant des objets connectés de type IoT.

Dans des modes particuliers de mise en oeuvre, le système 10 de communication peut être un système de communication à bande ultra étroite. Par « bande ultra étroite » (« Ultra Narrow Band » ou UNB dans la littérature anglo-saxonne), on entend que le spectre fréquentiel instantané des signaux radio émis par les dispositifs émetteurs 20 est de largeur fréquentielle inférieure à deux kilohertz, voire inférieure à un kilohertz. Un tel système permet de limiter significativement la consommation électrique des dispositifs émetteurs 20 lorsqu'ils communiquent avec le réseau d'accès.

Le dispositif émetteur 20 est configuré pour émettre un message à destination d'un dispositif récepteur 31. Dans ce but, le dispositif émetteur 20 comporte un circuit de traitement comportant une mémoire, un ou plusieurs processeurs et un module de communication. Le module de communication permet, de manière conventionnelle, de mettre en oeuvre les différentes étapes d'une chaîne de transmission numérique (codage de source, codage de canal, modulation, transposition de fréquence, transmission radio, etc.). Dans ce but, le module de communication comporte un ensemble de moyens matériels et/ou logiciels, considérés comme connus de l'homme de l'art (encodeur, oscillateur local, mélangeur, filtre, convertisseur numérique/analogique, amplificateur, antenne, etc.).

Dans la suite de la description, on se place à titre d'exemple et de manière nullement limitative dans le cas où un message émis par un dispositif émetteur 20 à destination d'un dispositif récepteur 31 est codé par une séquence de symboles binaires. L'invention pourrait cependant aussi s'appliquer à une modulation utilisant des symboles pouvant prendre un nombre de valeurs différentes supérieur à deux.

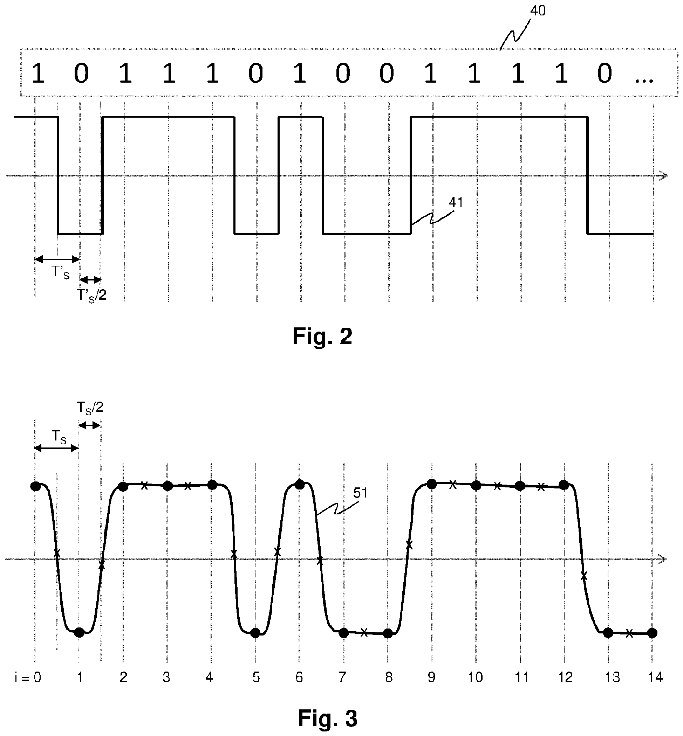

La figure 2 représente schématiquement une séquence 40 de symboles binaires codant un message à émettre par un dispositif émetteur 20 à destination d'un dispositif récepteur 31. Chaque symbole binaire prend la valeur '1' ou la valeur '0'. Chaque symbole est émis avec une fréquence d'émission de symboles $f'_S = 1/T'_S$. $T'_S$ est la durée d'émission d'un symbole binaire.

Un signal 41 représentatif de la séquence 40 de symboles à émettre est également illustré sur la figure 2. Le signal 41 prend un état « haut » pour chaque symbole de valeur '1' et un état « bas » pour chaque symbole de valeur '0'. Le signal 41 est par exemple utilisé pour moduler une porteuse prenant la forme d'un signal sinusoïdal de fréquence plus élevée, comme par exemple une fréquence d'une bande ISM (acronyme de « Industriel, Scientifique et Médical). Dans l'exemple considéré, la porteuse a une fréquence de 868 MHz et les symboles sont émis à un débit de 100 bauds (100 symboles par seconde). La modulation utilisée peut être une modulation de phase, une modulation de fréquence ou une modulation d'amplitude. Plus particulièrement, une modulation de phase de type BPSK (acronyme anglo-saxon pour « Binary Phase Shift Keying ») ou de type DBPSK (acronyme anglo-saxon pour « Differential Binary Phase Shift Keying ») peut être utilisée. Selon d'autres exemples, une modulation de fréquence de type GFSK (« Gaussian Frequency Shift Keying ») ou DGFSK (« Differential Gaussian Frequency Shift Keying ») peut également être utilisée. De telles modulations sont relativement simples à mettre en oeuvre, ce qui est particulièrement bien adapté pour des dispositifs émetteurs à bas coût de type IoT. Ces modulations ne favorisent cependant pas les transitions entre symboles. Il convient de noter que d'autres modulations pourraient être utilisées, et le choix d'une modulation particulière n'est qu'une variante de l'invention.

Le signal transportant le message émis par le dispositif émetteur 20 correspond alors à la porteuse modulée par le signal 41 représentatif de la séquence 40 de symboles binaires codant ledit message.

Le dispositif récepteur 31 est configuré pour recevoir un message en provenance d'un dispositif émetteur 20. Dans ce but, le dispositif récepteur 31 comporte un circuit de traitement comportant une mémoire, un ou plusieurs processeurs et un module de communication.

Le module de communication permet, de manière conventionnelle, de mettre en oeuvre les différentes étapes d'une chaîne de réception numérique (réception radio, transposition de fréquence, démodulation, décodage de canal, décodage de source, etc.). Dans ce but, le module de communication comporte un ensemble de moyens matériels et/ou logiciels, considérés comme connus de l'homme de l'art (antenne, amplificateur, oscillateur local, mélangeur, convertisseur analogique/numérique, filtre, décodeur, etc.).

Un programme d'ordinateur enregistré dans la mémoire du dispositif récepteur comporte un ensemble d'instructions de code de programme qui, lorsqu'elles sont exécutées par le ou les processeurs, configurent le ou les processeurs pour mettre en oeuvre un procédé 100 de récupération du temps symbole selon l'invention.

Alternativement ou en complément, le dispositif récepteur 31 comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie des étapes du procédé 100 de récupération du temps symbole selon l'invention. En d'autres termes, le dispositif récepteur 31 comporte des moyens qui sont configurés de façon logicielle (produit programme d'ordinateur spécifique) et/ou matérielle (FPGA, PLD, ASIC, composants électroniques discrets, etc.) pour mettre en oeuvre les étapes du procédé 100 selon l'invention.

La figure 3 représente schématiquement un signal 51 en bande de base construit de manière conventionnelle par le dispositif récepteur 31 à partir de la porteuse modulée transmise par le dispositif émetteur 20 pour émettre le message codé par la séquence 40 de symboles binaires représentée à la figure 2. Le signal 51 en bande de base est représentatif de la séquence 40 de symboles binaires : il prend un état « haut » lorsqu'un symbole prend la valeur '1' et un état « bas » lorsqu'un symbole prend la valeur '0'. De manière conventionnelle, le signal 51 est échantillonné par le dispositif récepteur 31, et chaque symbole est associé à un « instant symbole » d'échantillonnage. Sur la figure 3, la valeur de chaque échantillon correspondant à un instant symbole est représentée par un point. La différence de temps entre deux instants symbole est notée $T_S$.

La fréquence d'échantillonnage est au moins égale à la fréquence de réception des symboles $f_S = 1/T_S$. La fréquence d'échantillonnage est généralement un multiple de la fréquence $f_S$ de réception des symboles. Sur la figure 3, chaque croix représente un échantillon obtenu au milieu de l'intervalle séparant deux instants symbole.

A chaque symbole binaire est associé un indice i. Sur la figure 2, les échantillons d'indice i = 0, 2, 3, 4, 6, 9, 10, 11 et 12 correspondent à des symboles de valeur '1' car le signal 51 prend en ces échantillons un état « haut » correspondant à une valeur d'échantillon supérieure à un seuil haut prédéterminé. Les échantillons d'indice i = 1, 5, 7, 8, 13 et 14 correspondent à des symboles de valeur '0' car le signal 51 prend en ces échantillons un état « bas » correspondant à une valeur d'échantillon inférieure à un seuil bas prédéterminé.

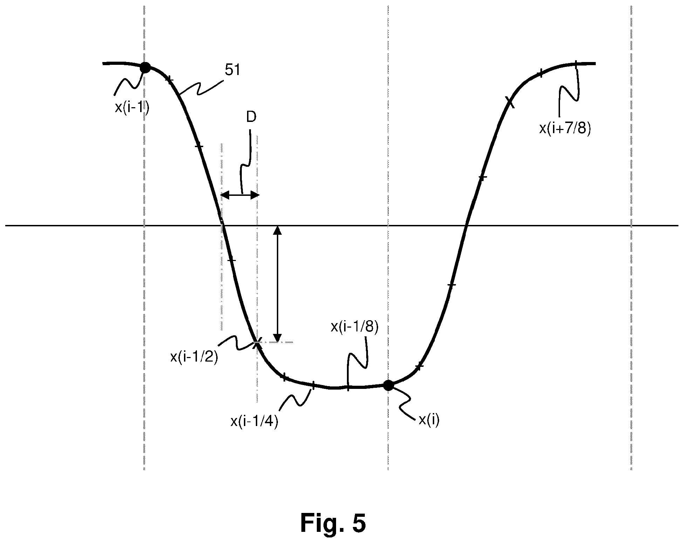

Tel qu'illustré sur la figure 5, la valeur d'un échantillon correspondant à un symbole d'indice i est notée x(i). La valeur d'un échantillon du signal 51 situé au milieu de l'intervalle entre deux échantillons d'indice (i - 1) et i est notée x(i - 1/2). Dans l'exemple considéré et illustré à la figure 5, la fréquence d'échantillonnage est huit fois plus grande que la fréquence $f_S$ de réception des symboles, on trouve alors entre l'échantillon d'indice (i - 1) et l'échantillon d'indice i les échantillons x(i - 7/8), x(i - 3/4), x(i - 5/8), x(i - 1/2), x(i - 3/8), x(i - 1/4) et x(i - 1/8).

Pour maintenir une synchronisation parfaite des symboles, la fréquence $f'_S$ d'émission des symboles par le dispositif émetteur et la fréquence $f_S$ de réception des symboles par le dispositif récepteur doivent être identiques. Toutefois, une dérive peut exister entre l'horloge utilisée par le dispositif émetteur pour l'émission de symboles et l'horloge utilisée par le dispositif récepteur pour la réception des symboles. Autrement dit, un biais peut exister entre le temps symbole du dispositif émetteur et le temps symbole du dispositif récepteur (les valeurs $T'_S$ et $T_S$ n'étant pas exactement identiques). Ce biais peut être particulièrement important pour des dispositifs émetteurs à bas coût dont les horloges ne sont pas toujours très fiables.

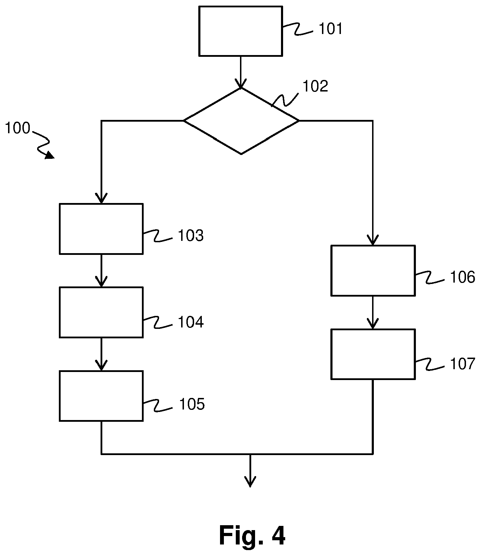

La figure 4 représentent les principales étapes d'un procédé 100 de récupération du temps symbole mis en oeuvre par le dispositif récepteur 31 pour décoder efficacement la séquence 40 de symboles binaires émise par le dispositif émetteur 20 même si un biais non négligeable existe entre le temps symbole du dispositif émetteur et le temps symbole du dispositif récepteur.

Une première étape correspond à l'échantillonnage 101 du signal 51 en bande de base. Cette étape a déjà été décrite précédemment en référence aux figures 2 et 5.

Une deuxième étape correspond, pour un symbole courant d'indice i, à la détection 102 d'une transition entre ce symbole courant et le symbole précédent d'indice (i - 1). Une transition est détectée si le symbole courant d'indice i et le symbole précédent d'indice (i - 1) présentent des états différents. Dans l'exemple illustré à la figure 2, les symboles d'indice i = 1, 2, 5, 6, 7, 9 et 13 correspondent à des symboles pour lesquels une transition est détectée par rapport au symbole précédent. En revanche, pour les symboles d'indice i = 3, 4, 8, 10, 11, 12 et 14, aucune transition n'est détectée par rapport au symbole précédent. Différentes méthodes peuvent être utilisées pour détecter une transition entre un symbole courant d'indice i et le symbole précédent d'indice (i - 1). Par exemple, une transition est détectée si la valeur absolue de la différence entre les d'échantillons x(i) et x(i - 1) est supérieure à un seuil prédéterminé.

Si une transition est détectée, le procédé 100 de récupération du temps symbole comporte les étapes suivantes :

- une mesure 103 d'une erreur absolue sur l'instant symbole du symbole courant d'indice i,
- une mise à jour 104, en fonction de l'erreur absolue mesurée, d'un biais moyen estimé entre le temps symbole du dispositif émetteur et le temps symbole du dispositif récepteur,
- une correction 105 de l'instant symbole du symbole suivant d'indice (i + 1) en fonction de l'erreur absolue mesurée et/ou en fonction du biais moyen estimé.

Il convient de noter que l'ordre des étapes 104 et 105 n'est pas nécessairement figé. Ainsi, la correction 105 de l'instant symbole du symbole suivant peut éventuellement être effectuée en fonction du biais moyen précédemment estimé, avant que le biais moyen ne soit mis à jour.

Si une transition n'est pas détectée, le procédé 100 de récupération du temps symbole comporte les étapes suivantes :

- une extrapolation 106 d'une erreur relative sur l'instant symbole du symbole courant d'indice i à partir du biais moyen estimé,
- une correction 107 de l'instant symbole du symbole suivant d'indice (i + 1) en fonction de l'erreur relative extrapolée.

Le biais moyen estimé est mémorisé par le dispositif récepteur 31. Le biais moyen estimé est par exemple mis à jour à chaque fois qu'une transition est détectée entre deux symboles consécutifs. Lorsqu'il n'y a pas de transition entre deux symboles consécutifs, le biais moyen estimé n'est pas mis à jour, mais il peut néanmoins être utilisé pour corriger le temps symbole. Le procédé 100 selon l'invention permet ainsi de corriger le temps symbole même en l'absence de transitions entre symboles. Ceci est particulièrement avantageux dans le cas où de nombreux symboles identiques se succèdent sans transition, car cela permet de maintenir la synchronisation symbole même s'il n'est pas possible de mesurer une erreur absolue pour un symbole courant.

La figure 5 représente schématiquement un exemple de mise en oeuvre de l'étape de mesure 103 d'une erreur absolue sur l'instant symbole d'un symbole courant d'indice i. L'erreur absolue est notée $E_{abs}$ et elle est calculée par exemple sous la forme :

[Math. 1]

$$E_{abs} = K \times [x(i) - x(i-1)] \times x(i - \frac{1}{2})$$

Le signe de la valeur du terme [x(i) - x(i - 1)] indique si la transition correspond au passage d'un état haut vers un état bas (la valeur de ce terme est alors négative) ou au passage d'un état bas vers un état haut (la valeur de ce terme est alors positive).

Lorsqu'une transition correspond au passage d'un état haut à un état bas, le terme x(i - ½) est négatif lorsque l'instant symbole estimé du symbole courant est en retard par rapport à l'instant exact du symbole, et il est positif lorsque l'instant symbole estimé du symbole courant est en avance par rapport à l'instant exact du symbole. Inversement, lorsqu'une transition correspond au passage d'un état bas à un état haut, le terme x(i - ½) est positif lorsque l'instant symbole estimé du symbole courant est en retard par rapport à l'instant exact du symbole, et il est négatif lorsque l'instant symbole estimé du symbole courant est en avance par rapport à l'instant exact du symbole.

Ainsi, le signe de l'erreur absolue $E_{abs}$ indique si l'erreur mesurée correspond à un retard (l'erreur absolue $E_{abs}$ est alors positive) ou à une avance (l'erreur absolue $E_{abs}$ est alors négative) par rapport à l'instant symbole exact du symbole courant.

La valeur absolue du terme x(i - ½) est particulièrement représentative de l'importance de l'erreur (correspondant à un retard ou à une avance) sur l'instant symbole du symbole courant. Plus cette valeur est grande, et plus le retard ou l'avance par rapport à l'instant exact du symbole est grande.

K est une constante positive qui permet d'obtenir une erreur absolue $E_{abs}$ dans le domaine temporel à partir des mesures d'amplitudes effectuées pour le symbole courant.

Dans l'exemple illustré sur la figure 5, l'erreur absolue $E_{abs}$ mesurée est représentative du retard D de l'instant symbole estimé pour le symbole d'indice i (instant correspondant à l'instant d'échantillonnage de la valeur x(i)) par rapport à l'instant symbole exact du symbole d'indice i. En l'absence de retard (et d'avance), l'échantillon x(i - ½) situé au milieu de l'intervalle de temps séparant l'échantillon x(i-1) et l'échantillon x(i) prendrait une valeur nulle.

D'autres méthodes pourraient être utilisées pour mesurer l'erreur absolue $E_{abs}$ sur l'instant symbole d'un symbole courant. Le choix d'une méthode particulière pour mesure cette erreur absolue n'est qu'une variante de l'invention.

La valeur du biais moyen estimé est par exemple noté $\beta$. Le biais moyen $\beta$ est par exemple initialisé à zéro, et lorsqu'une transition est détectée pour un symbole courant d'indice i > 0, l'étape de mise à jour 104 du biais moyen $\beta$ est par exemple effectuée ainsi :

[Math. 2]

$$\beta = \frac{\beta \times (i-1) + E_{abs}}{i}$$

Le biais moyen estimé $\beta$ correspond alors à un retard (si $\beta$ > 0) ou à une avance (si $\beta$ < 0) à corriger pour chaque nouveau symbole courant considéré. D'autres méthodes de calcul peuvent être employées pour estimer le biais moyen $\beta$ (par exemple par une régression linéaire ou d'autres modèles statistiques, avec éventuellement une suppression de certaines mesures qui présenteraient des variations trop importantes). Le choix d'une méthode particulière pour estimer le biais moyen β n'est qu'une variante de l'invention.

Une correction 105 peut alors être appliquée sur le temps symbole. La valeur de la correction à appliquer peut être calculée en fonction de l'erreur absolue mesurée $E_{abs}$ et/ou en fonction du biais moyen estimé β.

Considérons par exemple un scénario où la fréquence d'échantillonnage $f_E$ est N fois plus grande que la fréquence de réception des symboles $f_S$ ($f_E$ = N x $f_S$). La correction 105 peut consister à décaler les instants symboles des symboles suivants d'une durée correspondant à une fraction de la durée $T_S$. Par exemple, l'échantillon correspondant au symbole suivant d'indice (i + 1) deviendrait l'échantillon :

$$[Math. 3]$$

$$x(i + 1 - \frac{\left\lfloor \frac{\beta \times N}{T_S} \right\rfloor}{N})$$

où $\lfloor A \rfloor$ est la partie entière de A. Dans cette formule, le biais moyen β utilisé peut être le biais moyen estimé avant ou après la mise à jour effectuée à partir de l'erreur absolue $E_{abs}$ mesurée.

Selon un autre exemple, où la correction 105 est calculée directement à partir de l'erreur absolue mesurée, l'échantillon correspondant au symbole suivant d'indice (i + 1) deviendrait l'échantillon :

$$[Math. 4]$$

$$x(i + 1 - \frac{\left\lfloor \frac{E_{abs} \times N}{T_S} \right\rfloor}{N})$$

Dans l'exemple illustrée à la figure 5, la valeur de N est huit (N = 8), et la correction 105 pourrait consister à avancer les instants symboles suivants d'une durée correspondant à $T_S/8$. L'instant symbole du symbole suivant d'indice (i + 1) serait ainsi modifié pour devenir l'instant de l'échantillon x(i + 7/8).

Lorsqu'il n'y a pas de transition entre un symbole précédent d'indice (i - 1) et un symbole courant d'indice i, il n'est pas possible de mesurer une erreur absolue sur l'instant estimé du symbole courant. En revanche, une erreur relative sur l'instant estimé du symbole courant peut être extrapolée (à l'étape 106) à partir du biais moyen estimé β. Cela permet ainsi de corriger (à l'étape 107) l'instant symbole du symbole suivant d'indice (i + 1) en fonction de l'erreur relative extrapolée. Par exemple, l'erreur relative extrapolée est égale au biais moyen estimé β, et la correction appliquée est similaire à celle présentée dans la formule [Math. 3] ci-dessus.

Il convient toutefois de noter qu'une correction n'est pas nécessairement appliquée à chaque nouveau symbole courant. Par exemple, la correction est appliquée uniquement si un critère prédéterminé est vérifié. Il convient dans ce cas de maintenir une erreur accumulée $E_{acc}$. L'erreur accumulée $E_{acc}$ est mise à jour à chaque nouveau symbole courant, et elle est réinitialisée à chaque fois qu'une correction du temps symbole est effectuée.

Le fait de n'appliquer une correction que si un critère particulier est vérifié permet d'une part de limiter le nombre de corrections à effectuer et d'autre part d'éviter des corrections intempestives dues par exemples à des fluctuations temporelles du temps symbole (gigue) qui n'impactent que certains symboles localement. Le biais est estimé selon un modèle statistique et le poids d'une mesure diminue lorsque l'ensemble des mesures grandit. L'application d'un critère peut être liée à la résolution de la correction, qui peut être fixée par la valeur du sur-échantillonnage. L'utilisation d'un critère particulier peut notamment permettre d'éviter que l'erreur après correction soit pire qu'avant la correction.

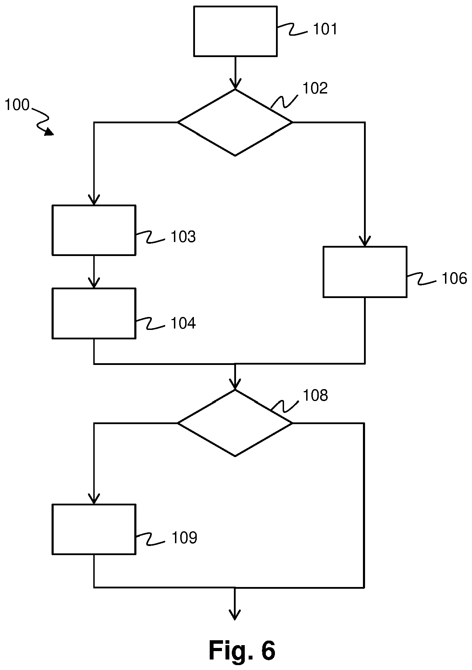

La figure 6 représente schématiquement les étapes d'un mode particulier de mise en oeuvre de la méthode 100 de récupération du temps symbole dans lequel une correction 109 n'est appliquée que si un critère particulier est vérifié lors d'une étape de vérification 108.

Les étapes 101 à 106 correspondent aux étapes 101 à 106 décrites précédemment en référence à la figure 4.

La correction 109 de l'instant du symbole suivant d'indice (i + 1) correspond soit à la correction 105 décrite en référence à la figure 4 dans le cas où une transition a été détectée pour le symbole courant d'indice i, soit à la correction 107 décrite en référence à la figure 4 dans le cas où une transition n'a pas été détectée pour le symbole courant d'indice i. Toutefois, la correction 109 n'a lieu que si un critère particulier est vérifié lors de l'étape de vérification 108.

Selon un premier exemple, une erreur accumulée $E_{acc}$ est calculée pour chaque symbole courant, et une correction 109 de l'instant symbole du symbole suivant n'est effectuée que si l'erreur accumulée $E_{acc}$ est supérieure à un seuil prédéterminé, l'erreur accumulée étant remise à zéro lorsqu'une correction est effectuée. Selon un autre exemple, la correction 109 n'est effectuée que si le nombre de symboles écoulés depuis la dernière fois qu'une correction a été effectuée est supérieure à un certain seuil.

Pour le mode de mise en oeuvre décrit en référence à la figure 6, le biais moyen estimé β est par exemple mis à jour à l'étape 104 selon la formule suivante lorsqu'une transition est détectée pour un symbole courant (le biais moyen n'est pas mis à jour si une transition n'est pas détectée) :

$$[Math.\ 5]$$

$$\beta = \frac{\beta \times (i-1) + (E_{abs} - E_{acc})}{i}$$

L'erreur absolue $E_{abs}$ correspond à l'erreur temporelle mesurée pour l'instant d'un symbole courant. L'erreur absolue $E_{abs}$ comprend notamment la somme des erreurs accumulées et non corrigées au cours des symboles précédents.

L'erreur accumulée $E_{acc}$ prend initialement la valeur zéro. Lorsqu'un symbole courant d'indice i est traité, l'erreur accumulée $E_{acc}$ est par exemple mise à jour selon la formule suivante :

$$[Math.\ 6]$$

$$E_{acc} = E_{acc} + \beta$$

Selon un autre exemple, si une mesure de l'erreur absolue $E_{abs}$ est effectuée sur le symbole courant, il est également envisageable d'assigner la valeur de l'erreur absolue $E_{abs}$ à l'erreur accumulée $E_{acc}$ ($E_{acc} = E_{abs}$).

Si le critère est vérifié à l'étape 108, alors une correction 109 est appliquée par exemple de manière similaire à ce qui a été décrit en référence à la formule [Math. 3] ci-dessus, et l'erreur accumulée est réinitialisée ($E_{acc} = 0$).

Selon un autre exemple, plutôt que de réinitialiser l'erreur accumulée $E_{acc}$ à la valeur zéro, il est envisageable de soustraire à l'erreur accumulée $E_{acc}$ la valeur de la correction appliquée.

La description ci-avant a été faite en considérant le calcul d'un biais moyen entre le temps symbole du dispositif émetteur et le temps symbole du dispositif récepteur. Le calcul d'une valeur moyenne du biais permet de simplifier l'implémentation puisqu'il n'est alors pas nécessaire de mémoriser les valeurs des erreurs mesurées successivement pour chaque symbole courant présentant une transition par rapport au symbole précédent. Il suffit en effet, pour calculer une valeur moyenne du biais, de mémoriser une erreur accumulée. Toutefois, la précision de l'estimation du biais n'est parfois pas suffisante lorsque le biais est estimé à partir d'une valeur moyenne. Comme indiqué précédemment, le biais peut être estimé à l'aide d'un modèle statistique. L'utilisation d'un modèle statistique implique nécessairement de collectionner et mémoriser un grand nombre de valeurs correspondant aux erreurs mesurées successivement pour les symboles présentant une transition. En contrepartie, la précision de l'estimation du biais est grandement améliorée.

Le modèle statistique peut notamment être une régression linéaire. D'autres modèles statistiques peuvent toutefois être envisagés (régression non linéaire, algorithmes d'apprentissage automatique, etc.).

Si l'on se réfère à nouveau à la figure 4, lorsqu'un modèle statistique est utilisé, l'étape de mise à jour 104 correspond à une alimentation du modèle statistique avec l'erreur absolue mesuré sur l'instant symbole courant. L'étape de correction 105 de l'instant symbole du symbole suivant peut alors être effectuée en fonction de l'erreur absolue mesurée et/ou en fonction d'un biais estimé β à partir du modèle statistique. Le modèle statistique peut notamment renseigner sur une valeur absolue estimée du biais à un instant courant (erreur absolue estimée entre l'instant symbole estimé et l'instant symbole exact du symbole courant) et/ou sur une valeur estimée d'un biais par temps symbole (erreur relative introduite à chaque nouveau symbole). En l'absence de transition, l'étape d'extrapolation 106 de l'erreur relative sur l'instant symbole du symbole courant est effectuée à l'aide du modèle statistique.

Il convient de noter que l'évolution du biais existant entre le temps symbole du dispositif émetteur et le temps symbole du dispositif récepteur peut varier au cours du temps. Le modèle statistique peut avantageusement permettre de modéliser cette évolution et estimer avec précision une valeur future de biais, même pendant des périodes où il n'y a pas de transition entre symboles et où il n'est par conséquent pas possible de faire de mesure sur l'erreur de l'instant symbole courant.

Là encore, une correction n'est pas nécessairement appliquée à chaque nouveau symbole courant. En effet, il est envisageable d'effectuer une correction de l'instant symbole seulement si un critère prédéterminé est vérifié.

Si l'on se réfère à la figure 6, dans le cas où un modèle statistique est utilisé, l'étape de vérification 108 du critère prédéterminé peut notamment comporter une comparaison de la valeur de la correction à effectuer avec un seuil prédéterminé. De telles dispositions permet d'éviter des corrections intempestives dues par exemples à des fluctuations temporelles significatives du temps symbole qui n'impactent que certains symboles localement. Cela peut notamment permettre d'éviter que l'erreur après correction soit pire qu'avant la correction.

L'étape de vérification 108 du critère prédéterminé peut également comporter une comparaison du nombre d'éléments contenus dans le modèle statistique avec un seuil prédéterminé. Le nombre d'éléments contenus dans le modèle statistique correspond au nombre de mesures 103 d'une erreur absolue effectuées au cours du temps sur les symboles pour lesquels une transition a été détectée. Chaque erreur absolue ainsi mesurée est en effet mémorisée et utilisée pour mettre à jour le modèle statistique (étape 104). Plus le nombre d'éléments contenus dans le modèle statistique est grand, et plus la précision de l'estimation du biais sera bonne. De telles dispositions permettent donc d'éviter d'appliquer une correction si la confiance que l'on accorde à cette correction n'est pas suffisante (ou autrement dit si la probabilité que la correction soit effectivement pertinente n'est pas assez forte).

Selon encore un autre exemple, la vérification du critère prédéterminé comporte une vérification que la valeur de la correction à effectuer s'inscrit dans un intervalle de confiance assujetti à une puissance statistique donnée. La puissance statistique d'un test est la probabilité de rejeter à bon escient (parce qu'elle est fausse) une hypothèse que l'on considère vraie a priori (l'hypothèse nulle). La puissance statistique est la valeur (1 - b), où b est la probabilité de ne pas rejeter l'hypothèse nulle alors qu'elle est fausse (b est le « risque de deuxième espèce »). La puissance statistique est généralement définie en fonction du nombre d'éléments dans le modèle statistique, de la dispersion des éléments, et du seuil du test (probabilité critique ou « valeur p »). L'intervalle de confiance fournit une plage de valeurs probables. L'intervalle de confiance est généralement lui aussi défini fonction du nombre d'éléments dans le modèle statistique, de leur dispersion, et du seuil du test. Le seuil du test fixe le niveau de confiance de l'intervalle. La confiance d'un test est la probabilité de ne pas rejeter l'hypothèse nulle lorsqu'elle est vraie. La confiance est la valeur (1 - a), où a est la probabilité de rejeter l'hypothèse nulle alors qu'elle est vraie (a est le « risque de première espèce »).

Comme indiqué précédemment, l'utilisation d'un modèle statistique peut également permettre de filtrer certaines mesures qui présenteraient des variations trop importantes dans le modèle. Cela permet d'optimiser la précision de l'estimation du biais à partir du modèle statistique. Statistiquement, la précision de l'estimation du biais s'améliore au cours du temps. Avantageusement, il est envisageable d'insérer au début de chaque message un motif de synchronisation comportant une séquence de symboles connue à la fois par le dispositif émetteur et par le dispositif récepteur afin d'optimiser la convergence du biais estimé vers la valeur réelle du biais existant entre le temps symbole du dispositif émetteur et le temps symbole du dispositif récepteur. De préférence, le motif de synchronisation est choisi pour que les symboles qui le composent présentent un grand nombre de transitions d'état, par exemple un nombre de transitions au moins égal à la moitié du nombre de symboles qui composent le motif de synchronisation.

La description ci-avant illustre clairement que, par ses différentes caractéristiques et leurs avantages, la présente invention atteint les objectifs fixés. En particulier, l'invention permet de corriger le temps symbole d'un dispositif récepteur même pendant des périodes de temps où il n'y a pas de transitions entre les symboles. De telles dispositions permettent de maintenir une synchronisation symbole entre un dispositif émetteur et un dispositif récepteur même si un biais important existe entre le temps symbole du dispositif émetteur et le temps symbole du dispositif récepteur.

Des mesures ont été réalisées pour démontrer l'efficacité du procédé selon l'invention. Pour une fréquence théorique de symboles de 100 bauds (100 symboles par seconde), et avec un rapport signal sur bruit (SNR pour « Signal on Noise Ratio » dans la littérature anglo-saxonne) de 20 dB, un dispositif récepteur qui implémente le procédé selon l'invention est capable de décoder un message avec un taux de succès proche de 100% si la fréquence réelle d'émission des symboles du dispositif émetteur est comprise entre 92 et 108 bauds (soit une erreur de +/- 8% sur la fréquence théorique de symboles). En revanche, un dispositif récepteur qui n'implémente pas le procédé selon l'invention n'est capable de décoder un message avec un taux de succès proche de 100% que si la fréquence réelle d'émission des symboles du dispositif émetteur est comprise entre 99,5 et 100,5 bauds (soit une erreur de +/- 0,5% sur la fréquence théorique de symboles).

De manière plus générale, il est à noter que les modes de mise en oeuvre et de réalisation considérés ci-dessus ont été décrits à titre d'exemples non limitatifs, et que d'autres variantes sont par conséquent envisageables. En particulier, le choix d'une méthode particulière pour détecter une transition entre deux symboles consécutifs, pour mesurer une erreur sur l'instant d'un symbole courant présentant une transition par rapport au symbole précédent, et/ou pour estimer un biais à partir de plusieurs mesures effectuées sur des symboles avec transition, correspond seulement à une variante de l'invention.

L'invention a été décrite pour des modulations binaires. Rien n'empêche cependant d'appliquer l'invention à des modulations pour lesquelles les symboles peuvent prendre un nombre de valeurs discrètes supérieur à deux. Utiliser une modulation avec des symboles présentant plus que deux états impactera potentiellement la méthode de détection d'une transition d'état entre deux symboles, ainsi que la méthode de mesure d'une erreur absolue sur un instant symbole, mais le coeur de l'invention consistant à modéliser un biais pour appliquer une correction au temps symbole pendant une période où il n'y a pas de transition entre symboles reste applicable.

L'invention a été décrite en considérant un système 10 de communication sans fil de type IoT. Rien n'exclut cependant de considérer d'autres systèmes de communication numériques, y compris des systèmes de communication filaires.

**Revendications**

1. Procédé (100) de récupération du temps symbole par un dispositif récepteur (31) pour décoder une séquence (40) de symboles émise par un dispositif émetteur (20), le temps symbole du dispositif émetteur présentant un biais par rapport au temps symbole du dispositif récepteur, ledit procédé (100) comprenant :

   - un échantillonnage (101) d'un signal (51) en bande de base représentatif de ladite séquence de symboles, chaque symbole étant associé à un instant symbole d'échantillonnage,
   - pour un symbole, dit symbole courant, une détection (102) d'une transition entre le symbole courant et le symbole précédent le symbole courant, ladite transition étant détectée si le symbole courant et le symbole précédent présentent des états différents,
   - en présence d'une transition :

     ◦ une mesure (103) d'une erreur absolue sur l'instant symbole du symbole courant,
     ◦ une mise à jour (104), en fonction de l'erreur absolue mesurée, d'un modèle statistique du biais entre le temps symbole du dispositif émetteur et le temps symbole du dispositif récepteur,
     ◦ une correction (105) de l'instant symbole du symbole suivant en fonction de l'erreur absolue mesurée et/ou en fonction d'un biais estimé à partir du modèle statistique,

   - en l'absence d'une transition :

     ◦ une extrapolation (106) d'une erreur relative sur l'instant symbole du symbole courant à partir d'un biais estimé à partir du modèle statistique,
     ◦ une correction (107) de l'instant symbole du symbole suivant en fonction de l'erreur relative extrapolée.

2. Procédé (100) selon la revendication 1 dans lequel le modèle statistique est une régression linéaire.

3. Procédé (100) selon l'une des revendications 1 ou 2 dans lequel une correction de l'instant symbole du symbole suivant n'est effectuée que si un critère prédéterminé est vérifié au cours d'une étape de vérification (108).

4. Procédé (100) selon la revendication 3 dans lequel la vérification (108) du critère prédéterminé comporte une comparaison de la valeur de la correction à effectuer avec un seuil prédéterminé.

5. Procédé (100) selon l'une des revendications 3 ou 4 dans lequel la vérification (108) du critère prédéterminé comporte une vérification que la valeur de la correction à effectuer s'inscrit dans un intervalle de confiance assujetti à une puissance statistique donnée.

6. Procédé (100) selon l'une des revendications 1 à 5 dans lequel le signal (51) en bande de base est obtenu par le dispositif récepteur (31) à partir d'un signal modulé en phase ou en fréquence par la séquence (40) de symboles par le dispositif émetteur (20).

7. Procédé (100) selon la revendication 6 dans lequel le signal est modulé par le dispositif émetteur (20) par une modulation BPSK, DBPSK, GFSK ou DGFSK.

8. Procédé (100) selon l'une des revendications 1 à 7 comportant une étape préalable, par le dispositif émetteur (20), avant l'émission de la séquence (40) de symboles, d'insertion d'un motif de synchronisation au début de la séquence (40) de symboles, ledit motif de synchronisation comportant une séquence de symboles connue à la fois par le dispositif émetteur (20) et par le dispositif récepteur (31).

9. Procédé (100) selon la revendication 8 dans lequel la séquence de symboles du motif de synchronisation présente un rapport entre un nombre de transitions entre symboles et le nombre de symboles qui composent le motif de synchronisation au moins égal à un seuil prédéterminé.

10. Produit programme d'ordinateur comportant un ensemble d'instructions de code de programme qui, lorsqu'elles sont exécutées par un processeur, configurent ledit processeur pour mettre en oeuvre un procédé (100) de récupération du temps symbole selon l'une des revendications 1 à 9.

11. Dispositif récepteur (20) d'un système (10) de communication comportant des moyens configurés pour mettre en oeuvre un procédé (100) de récupération du temps symbole selon l'une des revendications 1 à 9.

**12.** Système (10) de communication comportant un dispositif récepteur (20) selon la revendication 11.

**Patentansprüche**

**1.** Verfahren (100) zum Abrufen der Symbolzeit durch eine Empfängervorrichtung (31), um eine von einer Sendervorrichtung (20) gesendete Sequenz (40) von Symbolen zu decodieren, wobei die Symbolzeit der Sendervorrichtung eine Verzerrung im Verhältnis zur Symbolzeit der Empfängervorrichtung aufweist, wobei das Verfahren (100) Folgendes umfasst:

- Abtasten (101) eines Basisbandsignals (51), das die Sequenz von Symbolen darstellt, wobei jedes Symbol einem Abtastsymbolzeitpunkt zugeordnet ist,
- für ein Symbol, das sogenannte aktuelle Symbol, Erkennen (102) eines Übergangs zwischen dem aktuellen Symbol und dem aktuellen Symbol vorhergehenden Symbol, wobei der Übergang erkannt wird, wenn das aktuelle Symbol und das vorhergehende Symbol unterschiedliche Zustände aufweisen,
- bei Vorhandensein eines Übergangs:

  ◦ Messen (103) eines absoluten Fehlers am Symbolzeitpunkt des aktuellen Symbols,
  ◦ Aktualisieren (104) eines statistischen Modells der Abweichung zwischen der Symbolzeit der Sendervorrichtung und der Symbolzeit der Empfängervorrichtung in Abhängigkeit von dem gemessenen absoluten Fehler,
  ◦ Korrigieren (105) des Symbolzeitpunkts des nachfolgenden Symbols in Abhängigkeit von dem gemessenen absoluten Fehler und/oder in Abhängigkeit von einer anhand des statistischen Modells geschätzten Abweichung,
  - bei Nichtvorhandensein eines Übergangs:

  ◦ Extrapolieren (106) eines relativen Fehlers auf den Symbolzeitpunkt des aktuellen Symbols aus einem aus dem statistischen Modell geschätzten Bias,
  ◦ Korrigieren (107) des Symbolzeitpunkts des nachfolgenden Symbols in Abhängigkeit von dem extrapolierten relativen Fehler.

**2.** Verfahren (100) nach Anspruch 1, wobei das statistische Modell eine lineare Regression ist.

**3.** Verfahren (100) nach einem der Ansprüche 1 oder 2, wobei eine Korrektur des Symbolzeitpunkts des nachfolgenden Symbols nur dann ausgeführt wird, wenn ein vorbestimmtes Kriterium während eines Überprüfungsschritts (108) überprüft wird.

**4.** Verfahren (100) nach Anspruch 3, wobei das Überprüfen (108) des vorbestimmten Kriteriums einen Vergleich des Werts der auszuführenden Korrektur mit einem vorbestimmten Schwellenwert umfasst.

**5.** Verfahren (100) nach einem der Ansprüche 3 oder 4, wobei das Überprüfen (108) des vorbestimmten Kriteriums ein Überprüfen umfasst, dass der Wert der auszuführenden Korrektur in ein Konfidenzintervall fällt, das einer gegebenen statistischen Aussagekraft unterliegt.

**6.** Verfahren (100) nach einem der Ansprüche 1 bis 5, wobei das Basisbandsignal (51) durch die Empfängervorrichtung (31) anhand eines Signals erhalten wird, das durch die Sequenz (40) von Symbolen durch die Sendervorrichtung (20) phasen- oder frequenzmoduliert wird.

**7.** Verfahren (100) nach Anspruch 6, wobei das Signal durch die Sendervorrichtung (20) durch eine BPSK-, DBPSK-, GFSK- oder DGFSK-Modulation moduliert wird.

**8.** Verfahren (100) nach einem der Ansprüche 1 bis 7, das vor dem Senden der Sequenz (40) von Symbolen durch die Sendervorrichtung (20) einen vorherigen Schritt des Einfügens eines Synchronisationsmusters am Anfang der Sequenz (40) von Symbolen umfasst, wobei das Synchronisationsmuster eine Sequenz von Symbolen umfasst, die sowohl der Sendervorrichtung (20) als auch der Empfängervorrichtung (31) bekannt sind.

9. Verfahren (100) nach Anspruch 8, wobei die Sequenz von Symbolen des Synchronisationsmusters ein Verhältnis zwischen einer Anzahl von Übergängen zwischen Symbolen und einer Anzahl von Symbolen, die das Synchronisationsmuster bilden, aufweist, das mindestens gleichen einem vorbestimmten Schwellenwert ist.

10. Computerprogrammprodukt, das einen Satz von Programmcodeanweisungen umfasst, die, wenn sie von einem Prozessor ausgeführt werden, den Prozessor dazu konfigurieren, ein Verfahren (100) zum Abrufen der Symbolzeit nach einem der Ansprüche 1 bis 9 zu implementieren.

11. Empfängervorrichtung (20) eines Kommunikationssystems (10), die Mittel umfasst, die dazu konfiguriert sind, ein Verfahren (100) zum Abrufen der Symbolzeit nach einem der Ansprüche 1 bis 9 zu implementieren.

12. Kommunikationssystem (10), das eine Empfängervorrichtung (20) nach Anspruch 11 umfasst.

**Claims**

1. A method (100) for recovering the symbol time by a receiving device (31) in order to decode a sequence (40) of symbols transmitted by a transmitting device (20), the symbol time of the transmitting device having a bias relative to the symbol time of the receiving device, said method (100) comprising:

    - a sampling (101) of a baseband signal (51) representative of said sequence of symbols, each symbol being associated with a sampling symbol instant,
    - for a symbol, called current symbol, a detection (102) of a transition between the current symbol and the symbol preceding the current symbol, said transition being detected if the current symbol and the preceding symbol have different states,
    - in the presence of a transition:

        ◦ a measurement (103) of an absolute error on the symbol instant of the current symbol,
        ◦ an update (104), depending on the measured absolute error, of a statistical model of the bias between the symbol time of the transmitting device and the symbol time of the receiving device,
        ◦ a correction (105) of the symbol instant of the subsequent symbol depending on the measured absolute error and/or depending on a bias estimated from the statistical model,

    - in the absence of a transition:

        ◦ an extrapolation (106) of a relative error on the symbol instant of the current symbol from a bias estimated from the statistical model,
        ◦ a correction (107) of the symbol instant of the subsequent symbol depending on the extrapolated relative error.

2. The method (100) according to claim 1, wherein the statistical model is a linear regression.

3. The method (100) according to one of claims 1 or 2, wherein a correction of the symbol instant of the subsequent symbol is performed only if a predetermined criterion is verified during a verification step (108).

4. The method (100) according to claim 3, wherein the verification (108) of the predetermined criterion includes a comparison of the value of the correction to be performed with a predetermined threshold.

5. The method (100) according to one of claims 3 or 4, wherein the verification (108) of the predetermined criterion includes a verification that the value of the correction to be performed falls within a confidence interval subject to a given statistical power.

6. The method (100) according to one of claims 1 to 5, wherein the baseband signal (51) is obtained by the receiving device (31) from a signal which is phase or frequency modulated by the sequence (40) of symbols by the transmitting device (20).

7. The method (100) according to claim 6, wherein the signal is modulated by the transmitting device (20) by a BPSK, DBPSK, GFSK or DGFSK modulation.

8. The method (100) according to one of claims 1 to 7, including a preliminary step, by the transmitting device (20), before the transmission of the sequence (40) of symbols, of inserting a synchronisation pattern at the beginning of the sequence (40) of symbols, said synchronisation pattern including a sequence of symbols known both by the transmitting device (20) and by the receiving device (31).

9. The method (100) according to claim 8, wherein the sequence of symbols of the synchronisation pattern has a ratio between a number of transitions between symbols and the number of symbols which compose the synchronisation pattern which is at least equal to a predetermined threshold.

10. A computer program product including a set of program code instructions which, when executed by a processor, configure said processor to implement a method (100) for recovering the symbol time according to one of claims 1 to 9.

11. A receiving device (20) of a communication system (10) including means configured to implement a method (100) for recovering the symbol time according to one of claims 1 to 9.

12. A communication system (10) including a receiving device (20) according to claim 11.

**Fig. 1**

40

1 0 1 1 1 0 1 0 0 1 1 1 1 0 ...

41

$T'_S$

$T'_S/2$

**Fig. 2**

$T_S/2$

$T_S$

51

i = 0   1   2   3   4   5   6   7   8   9   10   11   12   13   14

**Fig. 3**

**Fig. 4**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6064707 A
- US 2014126656 A1

- US 5506577 A